# EUROPÄISCHE PATENTSCHRIFT

(11) **EP 4 646 397 B1**
(45) Veröffentlichungstag und Bekanntmachung des Hinweises auf die Patenterteilung: **21.01.2026**
(21) Anmeldenummer: 24798841.3
(22) Anmeldetag: 30.10.2024
(51) Int. Cl.: C04B 20/02

(54) **VERFAHREN UND VORRICHTUNG ZUR EFFIZIENTEN REDUKTION VON KOHLENDIOXIDEMISSIONEN**
METHOD AND DEVICE FOR EFFICIENTLY REDUCING CARBON DIOXIDE EMISSIONS
PROCÉDÉ ET DISPOSITIF DE RÉDUCTION EFFICACE DES ÉMISSIONS DE DIOXYDE DE CARBONE

(30) Priorität: 30.11.2023 DE 102023133490; 30.11.2023 LU 505664
(43) Veröffentlichungstag der Anmeldung: 12.11.2025
(73) Patentinhaber: thyssenkrupp Polysius GmbH, 59269 Beckum (DE); thyssenkrupp AG, 45143 Essen (DE)
(72) Erfinder: BERGER, Claudia, 08393 Schönberg (DE); RATZLAFF, Sergej, 59555 Lippstadt (DE); WILLMS, Eike, 44309 Dortmund (DE); MAIER, Oliver, 48167 Münster (DE); ZAJAC, Maciej, 69126 Heidelberg (DE); HANAFI, Ahmed, 68229 Mannheim (DE); SKOCEK, Jan, 69151 Neckargemünd (DE)
(74) Vertreter: thyssenkrupp Intellectual Property GmbH
(86) Internationale Anmeldenummer: PCT/EP2024/080648
(87) Internationale Veröffentlichungsnummer: WO 2025/113916

(56) Entgegenhaltungen:
- AU-A1- 2020 281 669
- RALF HABERMANN: "Untersuchungen zum Bewegungsverhalten von Sch�ttg�tern in horizontalen Pflugscharmischern", CHEMIE INGENIEUR TECHNIK, WILEY VCH. VERLAG, WEINHEIM; DE, vol. 89, no. 4, 9 March 2017 (2017-03-09), pages 475 - 479, XP071039970, ISSN: 0009-286X, DOI: 10.1002/CITE.201600127

## Beschreibung

Die Erfindung betrifft ein Verfahren, um mit Altbaustoffen, zum Beispiel Zementstein, Kohlendioxid sicher zu binden und so eine sichere Langzeitlagerung zu gewährleisten.

In zunehmendem Maße wird es notwendig, natürliche Ressourcen zu schonen und auch auf recyceltes Material zurückzugreifen. Ebenso sind die Emissionen von Kohlendioxid als Ursache für die globale Erwärmung kritisch. Daher wird zunehmend auf die Abtrennung von Kohlendioxid aus dem Abgas und dessen dauerhafte Speicherung oder Nutzung gesetzt. Eine mögliche Form ist die Einbringung als verflüssigtes Kohlendioxid in das Erdreich. Dieses Verfahren ist jedoch nicht unumstritten, da ein dauerhafter Verbleib nicht zwangsläufig garantiert ist und bei einem Entweichen damit der Treibhauseffekt wieder verstärkt werden würde, zumal für Abtrennung und Lagerung weitere Energie benötigt wird und damit potenziell wieder Kohlendioxid produziert wird.

Eine der Kohlendioxid-intensiven Industrien ist die Zementindustrie. Zum einen wird für den Prozess viel Energie benötigt, was bei den herkömmlichen fossilen Brennstoffen zu einer Kohlendioxid-Emission führt. Zum anderen wird aus dem Rohmaterial, beispielsweise Kalkstein, Kohlendioxid prozessbedingt freigesetzt.

Auf der anderen Seite fallen bei Abriss von Beton-Bauwerken große Mengen von Altbeton an. Daher wird derzeit diskutiert, Beton wiederaufzubereiten, um beispielsweise neuen Zement herzustellen. Hierbei ist jedoch problematisch, dass beispielsweise Sand und der abgebundene Zement schwer trennbar miteinander vermischt und verbunden sind. Die sandfreie oder wenigstens sandarme Komponente des Altbetons wird auch als Altzementstein bezeichnet. Es ist bekannt, dass Beton während der Lebensdauer Kohlendioxid aufnehmen kann, jedoch nur einen Bruchteil der bei der Herstellung aus dem Kalkstein freigesetzten Kohlendioxid. Nach langer Zeit, beispielsweise bei sehr alten Gebäuden, kann dieser Wert bei etwa 20 % bezogen auf den Calciumgehalt des Betons liegen, es wird also sehr langsam und damit über lange Zeiträume in etwa 1/5 des ursprünglich freigesetzten Kohlendioxids wieder aufgenommen.

Aus der WO 2020 / 058 247 A1 ist ein Verfahren und eine Anlage zum Aufbereiten von Material, das Zementstein enthält, bekannt.

Aus der EP 3 656 750 A2 ist die Verwendung von Kohlendioxid aus und für Zement bekannt.

Aus der nachveröffentlichten DE 10 2022 132 073 ist ein Verfahren und eine Vorrichtung zur effizienten Reduktion von Kohlendioxidemissionen bekannt.

Aus der nachveröffentlichten DE 10 2023 113 943 ist ein Verfahren und eine Vorrichtung zur effizienten Reduktion von Kohlendioxidemissionen bekannt.

Aus der nachveröffentlichten DE 10 2023 123 525 ist die Aktivierung von Altbeton mittels eines Pflugscharmischers und einer Mühle bekannt.

Aus der AU 2020 281 669 A1 ist ein verbesserter Prozess und eine Vorrichtung zur Carbonatisierung von Altbeton und/oder die Sequestrierung von CO₂ bekannt.

Aus RALF HABERMANN: "Untersuchungen zum Bewegungsverhalten von Schüttgütern in horizontalen Pflugscharmischern", CHEMIE INGENIEUR TECHNIK, WILEY VCH. VERLAG, WEINHEIM; DE, Bd. 89, Nr. 4, 9. März 2017 (2017-03-09), Seiten 475-479, XP071039970, ISSN: 0009-286X, DOI: 10.1002/CITE.201600127 zeigt Untersuchungen zum Bewegungsverhalten von Schüttgütern in horizontalen Pflugscharmischern.

Aufgabe der Erfindung ist es, die Carbonatisierung von Altbeton oder Altzementstein zu optimieren.

Gelöst wird diese Aufgabe durch das Verfahren mit den in Anspruch 1 angegebenen Merkmalen. Vorteilhafte Weiterbildungen ergeben sich aus den Unteransprüchen, der nachfolgenden Beschreibung sowie der Zeichnung.

Das erfindungsgemäße Verfahren dient zur Carbonatisierung von Altbeton oder Altbetonprodukten als Ausgangprodukt. Altbetonprodukte sind aus Altbeton hergestellte Stoffe, zumeist mit dem Zweck der Anreicherung des Anteils an Altzementstein und der Reduktion der SiO₂-Komponte. Grund dafür ist, dass eben nur Komponenten wie CaO, MgO und FeO in der Lage sind, Kohlendioxid zu binden. An diese soll Kohlendioxid, beispielsweise aus Abgasen gebunden werden. Vorteil ist, dass dadurch eine sichere und langfristige Lagerung des Kohlendioxids gegeben ist. Das Ausgangsprodukt wird in einem ersten Schritt zerkleinert. Auch wenn dieses zumeist bereits beispielsweise beim Abriss eines Gebäudes meist grob zerkleinert wird, führt die übliche Lagerung im Freien dazu, dass durch Nässe es zu einem Abbinden noch reaktiver Bestandteile und damit zu einem erneuten Verklumpen kommt. Zusätzlich ist diese grobe Zerkleinerung für die weitere Verarbeitung zumeist ohnehin nicht ausreichend. Bei der Grobzerkleinerung kann es jedoch zu einer ersten Abreicherung der Quarzkomponente kommen, also zu einem Altbetonprodukt. Unabhängig von der ersten Grobzerkleinerung ist eine weitere Zerkleinerung notwendig, da in der ersten Grobzerkleinerung üblicherweise die notwendigen Feinheiten nicht erzielt werden können. Daher ist eine, gegebenenfalls erneute, Zerkleinerung wichtig, um eine möglichst große Oberfläche und gute Porenzugänglichkeit zu gewährleisten, damit eine Reaktion zwischen Feststoff und Gasphase möglichst effizient erfolgen kann. In einem zweiten Schritt wird das Material befeuchtet und mit einem Kohlendioxid-haltigem Gas beaufschlagt. Dadurch wird das Kohlendioxid im Feststoff gebunden, dem Gas entzogen und langzeitsicher gelagert.

Erfindungsgemäß wird der zweite Schritt in einem Mischer mit einer mechanischen Wirbelschicht mit einer Werkzeug-Froude-Zahl zwischen 3 und 11 durchgeführt. Ein beispielhafter und bevorzugter Mischer, mit dem eine solche mechanische Wirbelschicht einfach zu realisieren ist, ist der Pflugscharmischer. Pflugscharmischer sind aus dem Stand der Technik bekannt, die besondere Verwendung für die Carbonatisierung jedoch nicht. Aus der EP 0 500 561 B1 ist eine Vorrichtung zum Mischen und thermischen Behandeln von Feststoffpartikeln mit einem im Wesentlichen horizontal angeordnetem Behälter bekannt. Aus der DE 1 051 250 ist ein Verfahren und eine Vorrichtung zum Mischen von pulverförmigen oder feinkörnigen Massen mit Flüssigkeiten bekannt. Aus der DE 27 29 477 C2 ist ein pflugscharähnliches Mischwerkzeug für solche Vorrichtungen bekannt. Ein ähnliches Mischwerkzeug für solche Vorrichtungen ist auch aus der DE 197 06 364 C2 bekannt. Entsprechende Mischvorrichtungen werden von der Firma Gebrüder Lödige Maschinenbau GmbH unter der Bezeichnung Pflugschar-Mischer angeboten und erzeugen in ihrem Inneren ein mechanisches Wirbelbett.

Die Auswahl der Werkzeug-Froude-Zahl zwischen 3 und 11 bewirkt eine besonders bevorzugte Materialverteilung für die Carbonatisierung von Altbeton oder Altbetonprodukten. Da es sich hierbei um eine Reaktion zwischen dem Feststoff und dem Gas handelt, ist der innige Kontakt und auch die Raumausnutzung im Mischer für eine gute und effiziente Umsetzung wichtig. Die Auswahl der Werkzeug-Froude-Zahl zwischen 3 und 11 bewirkt, dass sich eine mechanisch erzeugte Wirbelschicht in sehr effizienter Weise ausbildet, der Feststoff also praktisch über das gesamte Volumen des Mischers verteilt wird. Geringere Werkzeug-Froude-Zahlen würden hingegen beispielsweise zu einer besseren Durchmischung im Gutbett des Feststoffes führen, was für die eigentliche Funktionsweise eines Mischers vorteilhaft sein kann, für die Carbonatisierung hingegen nicht. Zu hohe Werkzeug-Froude-Zahlen führen durch die Zentrifugalkraft im zentralen Bereich zu einem nicht mit Feststoff ausgefüllten Bereich und führen somit zu einer geringeren Effizienz. Daher ist gerade der Bereich der Werkzeug-Froude-Zahl zwischen 3 und 11 technisch vorteilhaft für die Carbonatisierung.

In einer weiteren Ausführungsform der Erfindung wird ein Pflugscharmischer mit Messerköpfen verwendet. Ein Wurfmischer, zu denen der Pflugscharmischer gehört, kann optional mit sogenannten Messerköpfen ausgestattet werden. Diese Messerköpfe sind schnelllaufend und deshalb gut für die Zerstörung von Agglomeraten geeignet. An dieser Stelle sind die Messerköpfe besonders vorteilhaft, da feuchtes Pulver zur Agglomeration neigt und damit eine Verringerung der freien Oberfläche einhergeht. Die Messerköpfe zerstören die entstandenen Agglomerate, so dass die spezifische Oberfläche groß bleibt.

Aus Habermann, Untersuchungen zum Bewegungsverhalten von Schüttgütern in horizontalen Pflugscharmischern, Chem. Ing. Tech., 2017, 89, No. 4, 475-479, Wiley-VCH ist bekannt, dass die Bestimmung der Werkzeug-Froude-Zahl in Mischern dem Fachmann geläufig ist.

In einer weiteren Ausführungsform der Erfindung wird das Zerkleinern im ersten Schritt in einer Rührwerkskugelmühle durchgeführt. Es hat sich herausgestellt, dass die Rührwerkskugelmühle eine bessere Zugänglichkeit der Metalloxidkomponente und damit eine leichtere und schnellere Carbonatisierung ermöglicht.

In einer weiteren Ausführungsform der Erfindung wird ein zu erreichender Carbonatisierungsgrad vorgegeben. Im Beton selber kann auf natürliche Weise nach langer Zeit dieser Wert auf bis zu 20 % ansteigen, was somit die Obergrenze des Eingangswertes darstellt. Ein Carbonatisierungsgrad von 100 % wäre zwar wünschenswert, die Reaktionsgeschwindigkeit nimmt aber am Ende stark ab, sodass aus wirtschaftlichen Gründen der vorgegebene zu erreichende Carbonatisierungsgrad zwischen 80 % und 95 % liegt. Das Material wird nach dem zweiten Schritt auf den aktuellen Carbonatisierungsgrad untersucht. Der aktuelle Carbonatisierungsgrad und der zu erreichende Carbonatisierungsgrad werden verglichen. Es wird also ermittelt, ob das Material schon wunschgemäß ausreichend Kohlendioxid gebunden hat oder noch nicht. Entsprechend wird die Verweilzeit des Materials im Mischer in Abhängigkeit des bereits erzielten Carbonatisierungsgrades angepasst. Ist der Carbonatisierungsgrad zu gering, wird die Verweilzeit erhöht, ist der Carbonatisierungsgrad zu hoch, kann die Verweilzeit verringert werden, um den Durchsatz beziehungsweise die Absorptionsgeschwindigkeit zu erhöhen.

In einer weiteren Ausführungsform der Erfindung wird der Kohlendioxid-Gehalt des dem Mischer zugeführten Kohlendioxid-haltigen Gases ermittelt und auch der Kohlendioxid-Gehalt des aus dem Mischer kommenden Gases wird ermittelt. Die Verweilzeit des Materials im Mischer wird in Abhängigkeit der beiden Konzentrationen eingestellt. Dieses ist besonders bevorzugt, wenn der Mischer diskontinuierlich betrieben wird. Je weiter die Reaktion voranschreitet, umso geringer ist der Anteil des aus dem Gasstrom entfernten Kohlendioxids. Wird dieser Anteil zu gering, ist dies ein Indiz für ein Kohlendioxidgesättigtes Material. Dann ist es sinnvoll, den Batchlauf zu beenden (und damit die Verweilzeit), um mit frischem Material wieder eine höhere Absorption erzielen zu können.

In einer weiteren Ausführungsform der Erfindung wird im Mischer eine Feuchte zwischen 5 und 25 Gew.-%, bevorzugt zwischen 10 und 15 Gew.-%, eingestellt. Beispielsweise kann das Material befeuchtet, beispielsweise mit 25 Gew.-% Feuchte zugeführt werden und dann im Mischer während der Durchströmung austrocknen. Es kann aber auch im Mischer eine Wasserzuführung zur Befeuchtung vorgesehen sein, um die Feuchte konstant zu halten. Unter Feuchte ist nicht gebundenes Wasser zu verstehen, also welches, welches bis 100 °C entfernbar ist, also beispielsweise und insbesondere kein Kristallwasser. Da dieses gebundene Wasser nicht frei verfügbar ist, steht dieses für die eigentliche Reaktion auch nicht zur Verfügung und ist daher nicht relevant.

In einer weiteren Ausführungsform der Erfindung wird im Mischer ein Füllgrad von 30 bis 60 % eingestellt (bezogen auf das Volumen).

In einer weiteren Ausführungsform der Erfindung erfolgt zwischen dem ersten Schritt und dem zweiten Schritt eine Zwischenspeicherung. Dieses ist beispielsweise und insbesondere der Fall bei einer Batch-Betriebsweise, um das Befüllen und Entleeren des Mischers zu vereinfachen und zu beschleunigen.

In einer weiteren Ausführungsform der Erfindung wird vor dem ersten Schritt eine Trocknung des Materials durchgeführt. Besonders bevorzugt wird für die Trocknung das Kohlendioxid-haltige Gas verwendet. Das Kohlendioxid-haltige Gas ist oftmals ein Abgas, welches eine gewisse erhöhte Temperatur aufweist. Zum einen kann so die Wärme genutzt werden, zum anderen wird das das Kohlendioxid-haltige Gas so weiter abgekühlt, um keine unnötige (zusätzliche) Wärme in den nachgeschalteten Mischer einzubringen, da das beispielsweise eine Austrocknung begünstigen würde. Außerdem ist die eigentliche Reaktion im nachfolgenden Mischer exotherm, sodass eine weitere Energiezufuhr schon daher kontraproduktiv ist. Des Weiteren ist eine vorhergehende Trocknung des Materials für den Zerkleinerungsprozess von Vorteil, da so eine Schülpenbildung verhindert wird.

In einer weiteren Ausführungsform der Erfindung wird nach dem zweiten Schritt eine Trocknung des Materials durchgeführt. Anschließend wird das befeuchtete und abgekühlte Kohlendioxid-haltige Gas dem Mischer zugeführt.

In einer weiteren Ausführungsform der Erfindung wird im ersten Schritt das Kohlendioxid-haltige Gas verwendet. Dieses gilt insbesondere, wenn das Ausgangsmaterial eine höhere Feuchte als die benötigten 25 Gew.-% aufweist.

Nachfolgend ist die erfindungsgemäße Vorrichtung anhand eines in der Zeichnung dargestellten Ausführungsbeispiels näher erläutert.

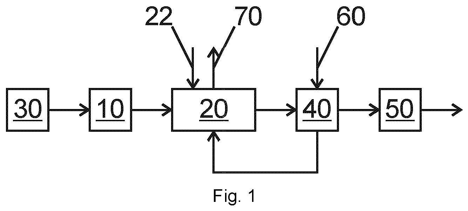

Fig. 1 beispielhafte Vorrichtung

In Fig. 1 ist die Vorrichtung stark schematisch gezeigt. Aus einem Rohstofflager 30 wird das Material einer Mühle 10 zugeführt und dort zerkleinert. Das zerkleinert Material wird in den Mischer 20, insbesondere einen horizontalen Pflugscharmischer, überführt. Gleichzeitig wird dem Mischer 20 Wasser über die Wasserzufuhr 22 zugeführt, um die Feuchte von beispielsweise 10 Gew.-% einzustellen. Das mit Kohlendioxid angereicherte Produkt wird aus dem Mischer 20 in einen Trockner 40 überführt und anschließend der Carbonatisierungsgrad in einer Analytik 50 bestimmt.

Das Kohlendioxid-haltige Gas, beispielsweise ein Abgas, wird über die CO₂-Zufuhr zunächst dem Trockner zugeführt, um das Produkt zu trocknen und dabei selber abgekühlt und befeuchtet zu werden. Dieser Gasstrom wird dann in den Mischer 20 geleitet, wo Teile des Kohlendioxids an den Altbeton gebunden werden. Anschließend wird das abgereicherte Gas als Abgas 70 abgegeben.

### Bezugszeichen

- 10: Mühle
- 20: Mischer
- 22: Wasserzufuhr
- 30: Rohstofflager
- 40: Trocknungsvorrichtung
- 50: Analytik
- 60: CO₂-Zufuhr
- 70: Abgas

## Patentansprüche

1. Verfahren zur Carbonatisierung von Altbeton oder Altbetonprodukten als Ausgangprodukt, wobei das Ausgangsprodukt in einem ersten Schritt zerkleinert und in einem zweiten Schritt befeuchtet und mit einem Kohlendioxid-haltigem Gas beaufschlagt wird, **dadurch gekennzeichnet, dass** der zweite Schritt in einem Mischer (20) mit einer mechanischen Wirbelschicht bei einer Werkzeug-Froude-Zahl zwischen 3 und 11 durchgeführt wird.

2. Verfahren nach Anspruch 1, **dadurch gekennzeichnet, dass** das Zerkleinern im ersten Schritt in einer Rührwerkskugelmühle durchgeführt wird.

3. Verfahren nach einem der vorstehenden Ansprüche, **dadurch gekennzeichnet, dass** der zweite Schritt in einem Pflugscharmischer durchgeführt wird.

4. Verfahren nach einem der vorstehenden Ansprüche, **dadurch gekennzeichnet, dass** ein zu erreichender Carbonatisierungsgrad vorgegeben wird, wobei das Material nach dem zweiten Schritt auf den aktuellen Carbonatisierungsgrad untersucht wird, wobei der aktuelle Carbonatisierungsgrad und der zu erreichende Carbonatisierungsgrad verglichen werden, wobei die Verweilzeit des Materials im Mischer (20) in Abhängigkeit des Vergleichs angepasst wird.

5. Verfahren nach einem der vorstehenden Ansprüche, **dadurch gekennzeichnet, dass** der Kohlendioxid-Gehalt des dem Mischer (20) zugeführten Kohlendioxid-haltigen Gases ermittelt wird und der Kohlendioxid-Gehalt des aus dem Mischer (20) kommenden Gases ermittelt wird, wobei die Verweilzeit des Materials im Mischer (20) in Abhängigkeit der beiden Konzentrationen eingestellt wird.

6. Verfahren nach einem der vorstehenden Ansprüche, **dadurch gekennzeichnet, dass** im Mischer (20) eine Feuchte zwischen 5 und 25 Gew.-%, bevorzugt zwischen 10 und 15 Gew.-%, eingestellt wird.

7. Verfahren nach einem der vorstehenden Ansprüche, **dadurch gekennzeichnet, dass** im Mischer (20) ein Füllgrad von 30 bis 60 % eingestellt wird.

8. Verfahren nach einem der vorstehenden Ansprüche, **dadurch gekennzeichnet, dass** zwischen dem ersten Schritt und dem zweiten Schritt eine Zwischenspeicherung erfolgt.

9. Verfahren nach einem der vorstehenden Ansprüche, **dadurch gekennzeichnet, dass** vor dem ersten Schritt eine Trocknung durchgeführt wird.

10. Verfahren nach einem der vorstehenden Ansprüche, **dadurch gekennzeichnet, dass** nach dem zweiten Schritt eine Trocknung durchgeführt wird.

11. Verfahren nach Anspruch 10, **dadurch gekennzeichnet, dass** für die Trocknung das Kohlendioxid-haltige Gas verwendet wird.

12. Verfahren nach einem der vorstehenden Ansprüche, **dadurch gekennzeichnet, dass** im ersten Schritt das Kohlendioxid-haltige Gas verwendet wird.

## Claims

1. Method for carbonating old concrete or old concrete products as a starting product, wherein the starting product is crushed in a first step and moistened and exposed to a carbon dioxide-containing gas in a second step, **characterized in that ,** the second step is carried out in a mixer (20) with a mechanical fluidized bed at a tool Froude number between 3 and 11.

2. Method according to claim 1, **characterized in that** the comminution in the first step is carried out in an agitator ball mill.

3. Method according to one of the preceding claims, **characterized in that** the second step is carried out in a plowshare mixer.

4. Method according to one of the preceding claims, **characterized in that** a degree of carbonation to be achieved is specified, wherein the material is examined after the second step for the current degree of carbonation, wherein the current degree of carbonation and the degree of carbonation to be achieved are compared, wherein the residence time of the material in the mixer (20) is adjusted depending on the comparison.

5. Method according to one of the preceding claims, **characterized in that** the carbon dioxide content of the carbon dioxide-containing gas fed to the mixer (20) is determined and the carbon dioxide content of the gas coming out of the mixer (20) is determined, whereby the residence time of the material in the mixer (20) is adjusted depending on the two concentrations.

6. Method according to one of the preceding claims, **characterized in that** a moisture content of between 5 and 25 wt.%, preferably between 10 and 15 wt.%, is set in the mixer (20).

7. Method according to one of the preceding claims, **characterized in that** a filling level of 30 to 60% is set in the mixer (20).

8. Method according to one of the preceding claims, **characterized in that** intermediate storage takes place between the first step and the second step.

9. Method according to one of the preceding claims, **characterized in that** drying is carried out before the first step.

10. Method according to one of the preceding claims, **characterized in that** drying is carried out after the second step.

11. Method according to claim 10, **characterized in that** the carbon dioxide-containing gas is used for drying.

12. Method according to one of the preceding claims, **characterized in that** the carbon dioxide-containing gas is used in the first step.

## Revendications

1. Procédé de carbonatation de béton usagé ou de produits en béton usagé comme produit de départ, le produit de départ étant broyé dans une première étape, humidifié dans une deuxième étape et soumis à un gaz contenant du dioxyde de carbone, **caractérisé en ce que** la deuxième étape est réalisée dans un mélangeur (20) avec un lit fluidisé mécanique à un nombre de Froude compris entre 3 et 11.

2. Procédé selon la revendication 1, **caractérisé en ce que** le broyage dans la première étape est effectué dans un broyeur à billes à agitateur.

3. Procédé selon l'une des revendications précédentes, **caractérisé en ce que** la deuxième étape est réalisée dans un mélangeur à socs.

4. Procédé selon l'une des revendications précédentes, **caractérisé en ce qu'**un degré de carbonatation à atteindre est prédéfini, le matériau étant examiné après la deuxième étape pour déterminer le degré de carbonatation actuel, le degré de carbonatation actuel et le degré de carbonatation à atteindre étant comparés, le temps de séjour du matériau dans le mélangeur (20) étant ajusté en fonction de la comparaison.

5. Procédé selon l'une des revendications précédentes, **caractérisé en ce que** la teneur en dioxyde de carbone du gaz contenant du dioxyde de carbone acheminé vers le mélangeur (20) est déterminée et la teneur en dioxyde de carbone du gaz sortant du mélangeur (20) est déterminée, le temps de séjour du matériau dans le mélangeur (20) étant réglé en fonction des deux concentrations.

6. Procédé selon l'une des revendications précédentes, **caractérisé en ce qu'**une humidité comprise entre 5 et 25 % en poids, de préférence entre 10 et 15 % en poids, est réglée dans le mélangeur (20).

7. Procédé selon l'une des revendications précédentes, **caractérisé en ce qu'**un degré de remplissage de 30 à 60 % est réglé dans le mélangeur (20).

8. Procédé selon l'une des revendications précédentes, **caractérisé en ce qu'**un stockage intermédiaire a lieu entre la première étape et la deuxième étape.

9. Procédé selon l'une des revendications précédentes, **caractérisé en ce qu'**un séchage est effectué avant la première étape.

10. Procédé selon l'une des revendications précédentes, **caractérisé en ce qu'**un séchage est effectué après la deuxième étape.

11. Procédé selon la revendication 10, **caractérisé en ce que** le gaz contenant du dioxyde de carbone est utilisé pour le séchage.

12. Procédé selon l'une des revendications précédentes, **caractérisé en ce que,** dans la première étape, on utilise le gaz contenant du dioxyde de carbone.
